(19) **Europäisches Patentamt European Patent Office Office européen des brevets**

(11) **EP 4 334 206 B1**

(12) **FASCICULE DE BREVET EUROPEEN**

(45) Date de publication et mention de la délivrance du brevet:
**08.10.2025   Bulletin 2025/41**

(21) Numéro de dépôt: **22727796.9**

(22) Date de dépôt: **03.05.2022**

(51) Classification Internationale des Brevets (IPC):
**B64C 25/42** (2006.01)   **B60T 8/17** (2006.01)
**B64C 25/44** (2006.01)   **B60T 13/58** (2006.01)
**B60T 1/06** (2006.01)   **B60L 7/28** (2006.01)
**H02K 49/04** (2006.01)

(52) Classification Coopérative des Brevets (CPC):
**B64C 25/42; B60T 8/1703; B60T 13/748; B64C 25/44; H02K 49/046;** F16D 2121/18; Y02T 50/80

(86) Numéro de dépôt international:
**PCT/EP2022/061842**

(87) Numéro de publication internationale:
**WO 2022/233865 (10.11.2022 Gazette 2022/45)**

(54) **DISPOSITIF DE FREINAGE MAGNETIQUE A COURANT DE FOUCAULT, ROUE FREINEE DE VEHICULE ET ATTERRISSEUR D'AERONEF EQUIPE D'UNE TELLE ROUE**

MAGNETISCHE BREMSVORRICHTUNG MIT WIRBELSTROM, BREMSRAD EINES FAHRZEUGS UND LANDEGERÄT EINES FLUGZEUGS MIT EINEM SOLCHEN RAD

MAGNETIC EDDY CURRENT BRAKING DEVICE, BRAKED VEHICLE WHEEL AND AIRCRAFT LANDING GEAR EQUIPPED WITH SUCH A WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **03.05.2021   FR 2104656**

(43) Date de publication de la demande:
**13.03.2024   Bulletin 2024/11**

(73) Titulaire: **Safran Landing Systems 78140 Vélizy-Villacoublay (FR)**

(72) Inventeurs:
• **NGUYEN, Duy-Minh 77550 MOISSY-CRAMAYEL (FR)**
• **DURAND, Guillaume 77550 MOISSY-CRAMAYEL (FR)**
• **KLIM, Graeme 77550 MOISSY-CRAMAYEL (FR)**

(74) Mandataire: **Cabinet Boettcher 5, rue de Vienne 75008 Paris (FR)**

(56) Documents cités:
| EP-A1- 3 309 944 | CN-A- 105 591 523 |
| CN-A- 106 081 148 | CN-A- 111 900 855 |
| GB-A- 2 103 023 | JP-A- S 602 069 |
| US-A1- 2007 000 741 | US-A1- 2020 300 310 |

• GULBAHCE MEHMET ONUR ET AL: "Determination of the effect of conductive disk thickness on braking torque for a low power eddy current brake", 4TH INTERNATIONAL CONFERENCE ON POWER ENGINEERING, ENERGY AND ELECTRICAL DRIVES, IEEE, 13 May 2013 (2013-05-13), pages 1272 - 1276, XP032509616, ISSN: 2155-5516, [retrieved on 20131016], DOI: 10.1109/ POWERENG.2013.6635795

• CANOVA A ET AL: "Design of axial eddy current couplers", CONFERENCE RECORD OF THE 2002 IEEE INDUSTRY APPLICATIONS CONFERENCE : 37TH IAS ANNUAL MEETING ; 13 - 18 OCTOBER 2002, PITTSBURGH, PENNSYLVANIA, USA; [CONFERENCE RECORD OF THE IEEE INDUSTRY APPLICATIONS CONFERENCE. IAS ANNUAL MEETING], IEEE SERVICE CE, 13 October 2002 (2002-10-13), pages 1914 - 1921vol.3, XP032143352, ISBN: 978-0-7803-7420-1, DOI: 10.1109/ IAS.2002.1043795

• WIKIPEDIA: "Eddy current", 8 March 2018 (2018-03-08), XP055466757, Retrieved from the Internet <URL:file:///C:/Users/dw53325/AppData/ Local/Temp/Eddy_current.pdf> [retrieved on 20180412]

**Description**

La présente invention concerne le domaine du freinage des roues de véhicule telles que les roues d'aéronef.

ARRIERE PLAN DE L'INVENTION

Une roue d'aéronef comprend généralement une jante reliée par un voile à un moyeu monté pour tourner sur un arbre (essieu ou fusée) support de roue.
Il est connu des dispositifs de freinage par friction comprenant une pile de disques de freinage qui est logée dans un espace s'étendant entre la jante et le moyeu et qui comprend une alternance de disques rotoriques liés en rotation avec la roue et de disques statoriques fixes par rapport au support de roue. Le dispositif de freinage comprend également des actionneurs hydrauliques ou électromécaniques montés sur un porte-actionneurs et agencés pour appliquer un effort de freinage commandé sur la pile de disques de manière à freiner la rotation de la roue.
Il a été proposé, notamment dans le document FR-A-2953196, d'équiper de telles roues freinées d'un frein auxiliaire électromagnétique assurant une dissipation d'énergie par d'autres moyens que la friction mécanique.
Sont en outre connus des dispositifs de freinage magnétique à courant de Foucault (dénommé « Eddy curent » en anglais) utilisés pour le freinage de roues de véhicules et plus particulièrement de roues d'aéronef. Le document WO-A-2014/029962 décrit un tel dispositif comprenant un rotor qui est pourvu d'un ou plusieurs aimants et qui est monté en regard d'un stator électromagnétique.
Les documents US-A-2020030010, JP S60 2069, GB 2103023 décrivent eux aussi des dispositifs de freinage magnétique à courant de Foucault.
D'une manière générale, les performances d'un dispositif de freinage magnétique à courant de Foucault dépendent de la puissance des aimants utilisés et de leurs dimensions. Le dispositif de freinage est donc relativement lourd et encombrant lorsque la puissance maximale de freinage requise est importante. Tel est le cas par exemple d'une utilisation sur avion, alors même que la masse et l'encombrement sont des contraintes sévères pour cette utilisation.

OBJET DE L'INVENTION

L'invention a notamment pour but de proposer un dispositif de freinage magnétique à courant de Foucault remédiant au moins en partie aux inconvénients précités.

RESUME DE L'INVENTION

A cet effet, on prévoit, selon l'invention, un dispositif de freinage magnétique à courant de Foucault, comprenant deux éléments externes encadrant un élément central en mouvement relatif par rapport aux éléments externes, les éléments externes ayant des premières faces en regard de deuxièmes faces opposées de l'élément central et portant chacun une pluralité d'aimants apte à émettre via les premières faces un flux magnétique engendrant dans l'élément central, réalisé en matériau électriquement conducteur, des courants de Foucault lorsque les éléments sont en mouvement relatif, les aimants étant disposés de telle manières que les éléments externes s'attirent mutuellement. Cet agencement permet d'optimiser et de concentrer le flux magnétique et donc d'engendrer un surplus de courant de Foucault, procurant ainsi un couple de freinage relativement important supérieur à celui qui serait obtenu avec deux ensembles constitués d'un élément fixe et un élément mobile. Avec une épaisseur adaptée de l'élément central, on peut obtenir une « superposition des effets de peau ». Cela est obtenu avec une épaisseur de l'élément central qui soit suffisamment faible tout en satisfaisant les contraintes thermiques et mécaniques.
L'invention concerne également une roue freinée équipée d'un tel dispositif et un atterrisseur équipé d'une telle roue.
D'autres caractéristiques et avantages de l'invention ressortiront à la lecture de la description qui suit de modes de réalisation particuliers et non limitatifs de l'invention.

BREVE DESCRIPTION DES DESSINS

Il sera fait référence aux dessins annexés, parmi lesquels :

[Fig. 1] la figure 1 est une vue schématique partielle d'un aéronef équipé d'atterrisseur selon l'invention ;
[Fig. 2] la figure 2 est une vue schématique partielle d'une roue selon l'invention, en coupe axiale ;
[Fig. 3] la figure 3 est une vue schématique partielle d'un stator d'un dispositif de freinage selon un premier mode de réalisation de l'invention ;
[Fig. 4] la figure 4 est une vue schématique partielle d'un stator d'un dispositif de freinage selon un deuxième mode de réalisation de l'invention ;
[Fig. 5] la figure 5 est une vue schématique partielle d'un stator d'un dispositif de freinage selon un troisième mode de réalisation de l'invention.

DESCRIPTION DETAILLEE DE L'INVENTION

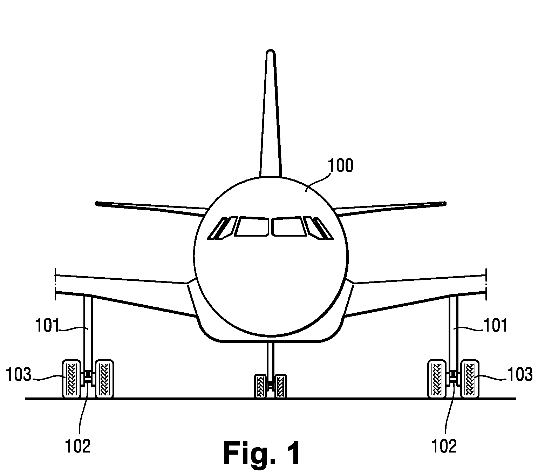

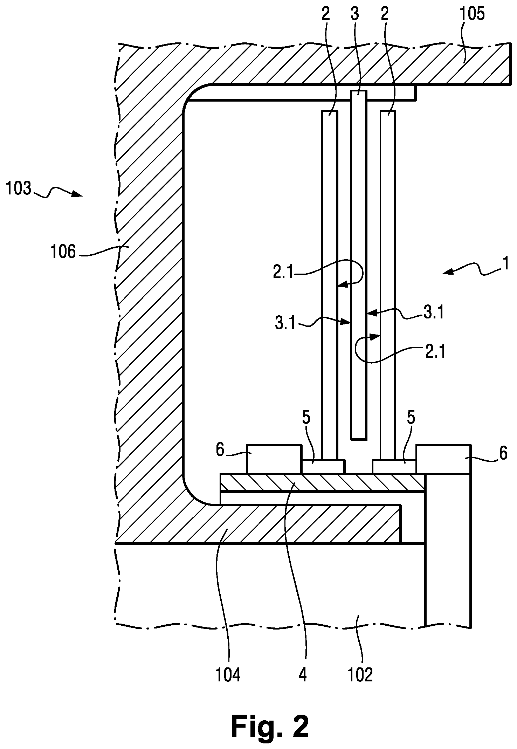

En référence aux figures 1 et 2, le système de freinage selon l'invention est porté par un aéronef 100 comportant des atterrisseurs 101. Chaque atterrisseur 101 comporte une jambe ayant une extrémité pourvue de deux arbres 102 coaxiaux sur chacun desquels est monté pour pivoter une roue 103. Chaque roue 103 comporte de façon connue en soi un moyeu 104 monté pour pivoter sur l'arbre 102 et une jante 105 reliée au moyeu 104 par un voile 106.

Selon l'invention, les roues 103 sont équipées d'un dispositif de freinage magnétique généralement désigné en 1.

Le dispositif de freinage magnétique 1 comprend des éléments fixes, ou stators 2, et des éléments mobiles, ou rotors 3.

Plus précisément ici, les stators 2 et les rotors 3 sont en forme de disques, coaxiaux à la roue 103, ayant donc des axes centraux colinéaires. Les stators 2 et les rotors 3 sont agencés par triplets dont un seul est représenté ici : chaque rotor 3 est disposé entre deux stators 2 ayant chacun une face principale 2.1 s'étendant en regard d'une face principale 3.1 du rotor 3. Les faces 2.1, 3.1 sont parallèles les unes aux autres.

Les stators 2 sont liés en rotation à l'arbre 102 ou à la jambe de l'atterrisseur 101, ici par l'intermédiaire d'un tube de torsion 4, tandis que les rotors 3 sont liés en rotation à la roue 103, ici à la jante 105 de la roue 103. Ainsi, dans chaque triplet, chaque rotor 3 tourne sur lui-même autour de son axe central par rapport aux stators 2 qui l'encadrent : pendant ce déplacement du rotor 3 selon une direction circonférentielle, les faces principales 3.1 restent en regard des faces principales 2.1 et parallèles à celles-ci.

Chacun des stators 2 est monté sur une glissière 5 coulissant (sans rotation) sur le tube de torsion 4 pour être mobile selon une direction axiale du tube de torsion 4 entre une première position dans laquelle le rotor 3 et le stator 2 sont rapprochés l'un de l'autre et ont leurs faces principales 3.1, 2.1 séparées par un premier entrefer prédéterminé et une deuxième position dans laquelle le rotor 3 et le stator 2 sont écartés l'un de l'autre et ont leurs faces principales 3.1, 2.1 séparées par un deuxième entrefer prédéterminé supérieur au premier entrefer prédéterminé. Au moins un actionneur électromécanique 6, commandable par le pilote de l'avion de manière connue en elle-même, déplace la glissière 5 entre les deux positions précitées. Il est prévu une butée axiale, de type butée à roulement ou butée à aiguilles, interposée entre les rotors 3 et les stators 2 (ou entre des parties liées à ceux-ci) pour s'assurer que les stators 2 ne puissent être rapprochés des rotors 3 au-delà du premier entrefer.

Les rotors 3 sont en cuivre ou en tout autre matériau électriquement conducteur.

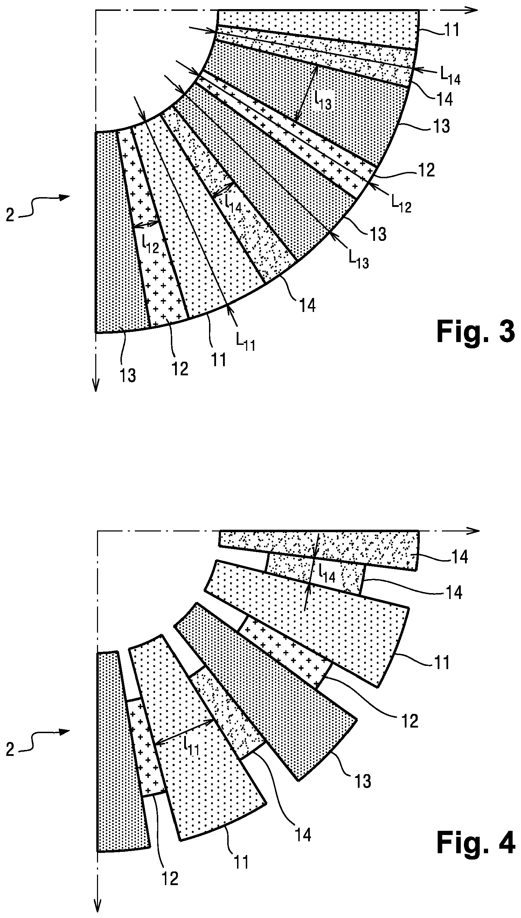

En référence aux figures 3 et 4 également, chaque stator 2 de chaque triplet comporte une pluralité d'aimants aptes à engendrer des courants de Foucault dans le rotor 3 lorsque le stator 2 est dans la première position et que le rotor 3 pivote en face du stator 2. Les aimants, ici à base de terres rares, sont par exemple au nombre de 16 et sont de préférence fixés sur un support en acier magnétique, voire sur un support non magnétique.

La pluralité d'aimants comprend des premiers aimants 11, 13 ayant un premier vecteur de magnétisation sensiblement perpendiculaire à la face principale 2.1 et étant séparés deux à deux par un deuxième aimant 12, 14 ayant un deuxième vecteur de magnétisation sensiblement perpendiculaire aux premiers vecteurs de magnétisation des deux premiers aimants 11, 13 entre lesquels se trouve le deuxième aimant 12, 14. On rappelle que le vecteur de magnétisation indique la direction du champ magnétique engendré par un aimant et s'étend dans l'aimant du pôle Sud au pôle Nord. Plus précisément, les aimants 11, 12, 13, 14 ont des formes de secteurs angulaires et ont une longueur L mesurée selon une direction radiale du stator 2 et une largeur moyenne l mesurée selon une direction localement tangentielle des disques (c'est-à-dire perpendiculairement à la direction de la longueur L) à moitié de ladite longueur L. Les longueurs L et largeurs l sont mesurées selon des directions localement parallèles aux surfaces en regard (les faces principales 2.1, 3.1).

Les aimants 11, 12, 13, 14 sont disposés selon un motif de Halbach, en alternance selon la direction circonférentielle du stator 2 comme suit : un aimant 11, un aimant 12, un aimant 13, un aimant 14, un aimant 11, un aimant 12, un aimant 13, un aimant 14 et ainsi de suite... En l'occurrence :

- chaque aimant 11 a son vecteur de magnétisation qui sort de la face principale 2.1 (son pôle Nord débouche sur la face principale 2.1),
- chaque aimant 12 a son vecteur de magnétisation qui s'étend depuis l'aimant 11 voisin vers l'aimant 13 voisin,
- chaque aimant 13 a son vecteur de magnétisation qui rentre dans la face principale 2.1 (son pôle Sud débouche sur la face principale 2.1),
- chaque aimant 14 a son vecteur de magnétisation qui s'étend depuis l'aimant 11 voisin vers l'aimant 13 voisin.

On comprend que les aimants 12, 14 disposés de chaque côté d'un même aimant 11 ont leur vecteur de magnétisation orientés dans des sens opposés.

Dans chaque triplet, chaque aimant 11 d'un des deux stators 2 fait face à un aimant 13 de l'autre des deux stators 2, et inversement, de sorte que tous les aimants 11 font face à des aimants 13 et s'attirent mutuellement au travers du rotor 3, ce qui améliore les performances.

Selon une version avantageuse de l'invention, les aimants 11, 12, 13, 14 ont des largeurs $l_{11}$, $l_{12}$, $l_{13}$, $l_{14}$ telles que les premiers aimants 11, 13 sont espacés deux à deux d'une première distance (égale à la largeur $l_{12}$, $l_{14}$) inférieure à une deuxième distance (égale à la largeur $l_{11}$, $l_{13}$) séparant deux à deux les deuxièmes aimants 12, 14. Les meilleurs résultats sont obtenus lorsque la largeur $l_{12}$, $l_{14}$ des deuxièmes aimants 12, 14 est 70% environ celles - $l_{11}$, $l_{13}$ - des premiers aimants 11, 13.

En référence à la figure 3, les longueurs $L_{11}$, $L_{12}$, $L_{13}$, $L_{14}$ des aimants 11, 12, 13, 14 sont identiques les unes aux autres.

En référence à la figure 4, les longueurs $L_{11}$, $L_{13}$ des aimants 11, 13 sont identiques les unes aux autres et les longueurs $L_{12}$, $L_{14}$ des aimants 12, 14 sont identiques les unes aux autres. Les longueurs $L_{11}$, $L_{13}$ des aimants 11, 13 sont supérieures aux longueurs $L_{12}$, $L_{14}$ des aimants 12, 14. De préférence, la longueur $L_{12}$, $L_{14}$ des deuxièmes aimants 12, 14 est 70% environ celles - $L_{11}$, $L_{13}$ - des premiers aimants 11, 13.

Dans l'agencement représenté sur la figure 4, les aimants 12, 14 sont positionnés symétriquement sur un cercle passant par le centre géométrique des pôles Nord des aimants 11 et Sud des aimants 13.

On comprend que, dans les deux modes de réalisation, les aimants 12, 14 occupent sur la face principale 2.1 une surface moindre que celle des aimants 11, 13.

L'agencement des aimants 11, 12, 13, 14 permet d'optimiser et de concentrer le flux magnétique produit par les aimants 11, 13 en réduisant le chemin de retour du flux magnétique qui passe par les aimants 12, 14 et non par leur support dont la masse peut être réduite puisqu'il n'a pas besoin d'assurer une fonction de conduction du flux magnétique.

Les deux modes de réalisation ci-dessus permettent tous les deux une augmentation du couple de freinage fourni tout en limitant la masse et l'encombrement du dispositif.

Le premier mode de réalisation permet un couple de freinage plus élevé que le deuxième mode de réalisation mais présente en revanche un poids plus important.

Chaque rotor 3 a une épaisseur telle qu'un effet de peau (autrement appelé effet pelliculaire ou effet Kelvin) soit engendré depuis chaque face 3.1 du rotor 3 sur plus de la moitié de l'épaisseur du rotor 3 au moins sur une plage de vitesses relatives possibles du rotor 3 par rapport aux stators 2. Les courants de Foucault engendrés depuis les deux faces 3.1 vont alors circuler dans la partie centrale de chaque rotor 3, ce qui va augmenter le couple de freinage. On obtient ainsi une « superposition des effets de peau », l'épaisseur du rotor 3 étant suffisamment faible pour obtenir cet effet tout en satisfaisant les contraintes thermiques et mécaniques. Dans un exemple, cet effet donne environ 60% de performance en plus.

On comprend que, par effet de peau, les courants se concentrent principalement dans une certaine profondeur de la surface de l'élément central, dite profondeur de peau $\delta$, déterminée par la formule :

$$\delta = \sqrt{\frac{\rho}{\pi f \mu_r \mu_0}}$$

dans laquelle $\rho$ est la résistivité du matériau, f est la fréquence de rotation, $\mu_r$ est la perméabilité relative (généralement 1) et $\mu_0$ est la constante de perméabilité

soit $4\pi.10^{-7}$.

La profondeur de peau varie en fonction de la résistivité électrique du matériau et la vitesse de rotation (ou fréquence électrique) qui sont variables dans notre application. La peau augmente quand la résistivité augmente (haute température) et quand la vitesse de rotation diminue. Au début du freinage où la vitesse est haute et la température est basse (la résistivité est basse), la peau est peu profonde. Pendant le freinage, la vitesse diminue et la température augmente (la résistivité augmente), la peau deviendra plus profonde.

La superposition des peaux des deux côtés de l'élément central augmente le couple de manière importante, l'épaisseur de l'élément central doit être déterminée de manière à avoir la superposition des peaux dès le début du freinage. On essaiera d'avoir une épaisseur relativement faible en tenant compte des contraintes mécaniques et thermiques mises en œuvre dans un dispositif de freinage.

Pour avoir la superposition des peaux à une vitesse donnée, la peau X (l'épaisseur dans laquelle circulent les courants) doit dépasser la moitié de l'épaisseur Y de l'élément central. On a donc $X \geq Y/2$ ou bien $Y \leq 2X$. La superposition qui a lieu au milieu de l'élément central est de $(2X-Y)$. A titre d'exemple, pour avoir une superposition des effets de peau dès 1500 tours par minute, l'épaisseur de l'élément central doit être inférieure ou égale à 9,4mm. Si on choisit une épaisseur de 8mm par exemple, les effets de peau se superposeront sur une épaisseur de 1,4mm.

On comprend que pour provoquer le freinage, les actionneurs électromécaniques de commande sont pilotés pour amener les stators 2 dans la première position et que, pour interrompre le freinage, les actionneurs électromécaniques de commande sont pilotés pour amener les stators 2 dans la deuxième position, position dans laquelle les aimants ne permettent pas d'engendrer dans les rotors des courants de Foucault suffisants pour provoquer le freinage des rotors. On notera qu'en dessous d'une certaine vitesse de rotation des rotors 3, le couple de freinage est négligeable quelle que soit la position des stators. Il faudra alors éventuellement envisager un frein additionnel.

Bien entendu, l'invention n'est pas limitée aux modes de réalisation décrits mais englobe toute variante entrant dans le champ de l'invention telle que définie par les revendications.

En particulier, le dispositif peut avoir une structure différente de celle décrite.

Les aimants peuvent être portés par le rotor au lieu du stator, deux rotors encadrant un stator.

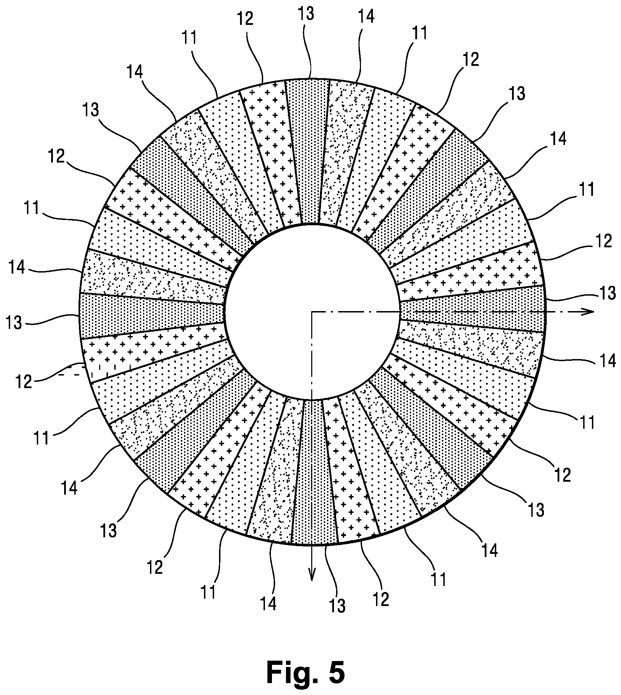

La forme, l'agencement et les dimensions des aimants peuvent être différents de ceux décrits. Par exemple, et selon le troisième mode de réalisation représenté sur la figure 5, les aimants 11, 12, 13, 14 ont tous les mêmes dimensions. De préférence, les premiers aimants 11, 13 représenteront 70% environ de la surface de l'élément qui les porte mais ce n'est pas obligatoire.

Le nombre de rotors et/ou le nombre de stators peuvent être différents de ceux mentionnés.

Bien que le rotor et le stator aient été décrits sous la forme de disques parallèles et en regard l'un de l'autre, le stator et le rotor peuvent avoir d'autres formes. Le dispositif décrit est à flux axial mais l'invention est applicable à un fonctionnement en flux radial. Ainsi, le triplet peut par exemple être agencé sous la forme d'un tambour externe et d'un tambour interne entre lesquels s'étend un tambour central de telle manière que le tambour central ait une surface extérieure en regard d'une surface intérieure du tambour externe et une surface intérieure en regard d'une surface extérieure du tambour interne. Les aimants sont portés par la surface extérieure du tambour interne et par la surface intérieure du tambour externe.

Le dispositif de freinage magnétique selon l'invention peut être associé à un dispositif de freinage à friction classique qui comprend des organes de friction, par exemple une pile de disques de carbone, et une pluralité d'actionneurs électromécaniques portés par un porte-actionneurs. Chaque actionneur électromécanique comprend un moteur électrique et un poussoir apte à être déplacé par le moteur électrique pour presser la pile de disques. L'actionneur électromécanique est ainsi destiné à produire un effort de freinage commandé sur la pile de disques. Un mode de pilotage des dispositifs de freinage est par exemple connu du document FR-A-2953196.

En variante, les aimants peuvent être directement fixés sur les disques rotoriques ou les disques statoriques du frein à friction, ou les aimants peuvent être recouverts d'une garniture de friction, de sorte que le dispositif de freinage assure un freinage magnétique pour ralentir la roue quand les disques sont écartés les uns des autres d'un entrefer adéquat et un freinage par friction lorsque les disques sont appliqués les uns contre les autres. Il n'y a donc plus de butée axiale entre les disques dans ce mode de réalisation.

Il est possible d'utiliser, pour l'actionnement mécanique du dispositif de freinage magnétique, un actionneur agissant sur plusieurs stators coulissant dans le même sens pour être rapprochés du rotor adjacent, plutôt qu'un actionneur pour chaque stator.

D'autres modes d'actionnement du frein magnétique sont envisageables : par exemple électromagnétiques au moyen de bobines engendrant un champ magnétique annulant celui des aimants permanents, rotors et stators étant fixes axialement.

L'invention est utilisable sur tout type de véhicule.

## Revendications

1. Dispositif de freinage magnétique à courant de Foucault, comprenant deux éléments externes (2) encadrant un élément central (3) en mouvement relatif par rapport aux éléments externes (2), les éléments externes (2) ayant des premières faces (2.1) en regard de deuxièmes faces opposées (3.1) de l'élément central (3) et portant chacun une pluralité d'aimants (11, 12, 13, 14) apte à émettre via les premières faces (2.1) un flux magnétique engendrant dans l'élément central (3), réalisé en matériau électriquement conducteur, des courants de Foucault lorsque les éléments (2, 3) sont en mouvement relatif, les aimants étant disposés de telle manière que les éléments externes (2) s'attirent mutuellement, **caractérisé en ce que** l'élément central (3) a une épaisseur telle qu'un effet de peau soit engendré depuis chaque face (3.1) de l'élément central (3) sur plus de la moitié de l'épaisseur de l'élément central (3) au moins sur une plage de vitesses relatives possibles de l'élément central (3) par rapport aux éléments externes (2).

2. Dispositif selon la revendication 1, dans lequel les éléments externes (2) sont des stators et l'élément central (3) est un rotor.

3. Dispositif selon la revendication 2, dans lequel les éléments externes (2) et l'élément central (3) ont une forme de disque et ont des axes centraux colinéaires.

4. Dispositif selon la revendication 1, dans lequel la pluralité d'aimants comprend des premiers aimants (11, 13) et des deuxièmes aimants (12, 14) disposés en alternance, les premiers aimants (11, 13) ayant un premier vecteur de magnétisation sensiblement perpendiculaire aux surfaces en regard (2.1, 3.1) et chacun des deuxièmes aimants (12, 14) ayant un deuxième vecteur de magnétisation sensiblement perpendiculaire aux premiers vecteurs de magnétisation des deux premiers aimants entre lesquels il se trouve ; et les aimants (11, 12, 13, 14) ont des largeurs telles que les premiers aimants (11, 13) sont espacés deux à deux d'une première distance inférieure à une deuxième distance séparant deux à deux les deuxièmes aimants (12, 14).

5. Dispositif selon la revendication 4, dans lequel la largeur des deuxièmes aimants (12, 14) est 70% environ celle des premiers aimants (11, 13).

6. Dispositif selon la revendication 4 ou 5, dans lequel les premiers aimants (11, 13) ont une longueur mesurée selon une direction perpendiculaire à leur largeur et localement parallèle aux surfaces en regard (2.1, 3.1) qui est supérieure à une longueur des deuxièmes aimants (12, 14) mesurée selon une direction perpendiculaire à leur largeur et localement parallèle aux surfaces en regard (2.1, 3.1).

7. Dispositif selon la revendication 6, dans lequel la longueur des deuxièmes aimants (12, 14) est 70% environ celle des premiers aimants (11, 13).

8. Dispositif selon la revendication 4, dans lequel les premiers aimants (11, 13) représentent 70% environ de la surface (2.1) de l'élément (2) qui les porte.

9. Dispositif selon la revendication 4, dans lequel les éléments (2, 3) ont une forme de disque et ont des axes centraux colinéaires, l'élément mobile (3) ayant une face principale (3.1) en regard d'une face principale (2.1) de l'élément fixe (2) formant ainsi les surfaces en regard et l'élément mobile (3) pivotant sur son axe central, chaque premier vecteur s'étendant perpendiculairement aux faces principales (2.1, 3.1) et chaque deuxième vecteur de magnétisation s'étendant parallèlement aux faces principales (2.1, 3.1) et à une direction localement tangente à l'élément (2) pourvu des aimants, la largeur de chaque aimant (11, 12, 13, 14) étant mesurée selon une direction localement tangente à l'élément (2) en question.

10. Dispositif selon la revendication 9, dans lequel les aimants (11, 12, 13, 14) ont une forme de secteur angulaire et les premiers aimants (11, 13) ont une dimension radiale supérieure à une dimension radiale des deuxièmes aimants (12, 14).

11. Dispositif selon l'une quelconque des revendications précédentes, dans lequel les aimants (11, 12, 13, 14) sont disposés selon un motif de Halbach.

12. Dispositif selon l'une quelconque des revendications précédentes, dans lequel les aimants (11, 12, 13, 14) sont portés par l'élément fixe (2).

13. Roue (104) freinée de véhicule comportant un dispositif de freinage selon l'une quelconque des revendications précédentes, comportant une jante, un voile ou un moyeu auquel l'élément mobile (3) du dispositif de freinage est lié en rotation.

14. Atterrisseur (101) comprenant une jambe (102) ayant une extrémité portant un arbre (103) sur lequel est monté le moyeu d'une roue (104) selon la revendication 13, l'élément fixe (2) du dispositif de freinage étant lié en rotation à la jambe (102).

**Patentansprüche**

1. Magnetische Wirbelstrombremsvorrichtung, umfassend zwei externe Elemente (2), die ein sich in Relativbewegung zu den externen Elementen (2) befindliches Zentralelement (3) umrahmen, wobei die externen Elemente (2) erste Flächen (2.1) aufweisen, welche einander entgegengesetzten zweiten Flächen (3.1) des Zentralelements (3) gegenüberliegen, und jeweils eine Mehrzahl von Magneten (11, 12, 13, 14) tragen, die über die ersten Flächen (2.1) einen Magnetfluss aussenden können, welcher in dem aus einem elektrisch leitfähigen Material bestehenden Zentralelement (3) Wirbelströme erzeugt, wenn sich die Elemente (2, 3) in Relativbewegung zueinander befinden, wobei die Magnete derart angeordnet sind, dass die externen Elemente (2) einander anziehen, **dadurch gekennzeichnet, dass** das Zentralelement (3) eine solche Dicke aufweist, dass von jeder Fläche (3.1) des Zentralelements (3) über mehr als die Hälfte der Dicke des Zentralelements (3) zumindest innerhalb eines Bereichs möglicher Relativgeschwindigkeiten des Zentralelements (3) in Bezug auf die externen Elemente (2) ein Skin-Effekt erzeugt wird.

2. Vorrichtung nach Anspruch 1, wobei es sich bei den externen Elementen (2) um Statoren und bei dem Zentralelement (3) um einen Rotor handelt.

3. Vorrichtung nach Anspruch 2, wobei die externen Elemente (2) und das Zentralelement (3) scheibenförmig ausgebildet sind und kollineare Mittelachsen besitzen.

4. Vorrichtung nach Anspruch 1, wobei die Mehrzahl von Magneten erste Magnete (11, 13) und zweite Magnete (12, 14) umfasst, die abwechselnd zueinander angeordnet sind, wobei die ersten Magnete (11, 13) einen ersten Magnetisierungsvektor aufweisen, der im Wesentlichen senkrecht zu den einander gegenüberliegenden Flächen (2.1, 3.1) verläuft, und ein jeder der zweiten Magnete (12, 14) einen zweiten Magnetisierungsvektor aufweist, der im Wesentlichen senkrecht zu den ersten Magnetisierungsvektoren der beiden ersten Magnete verläuft, zwischen denen er sich befindet; und wobei die Magnete (11, 12, 13, 14) derart breit ausgebildet sind, dass die ersten Magnete (11, 13) jeweils paarweise durch eine erste Distanz beabstandet sind, die kleiner ist als eine zweite Distanz, durch welche die zweiten Magnete (12, 14) jeweils paarweise beabstandet sind.

5. Vorrichtung nach Anspruch 4, wobei die Breite der zweiten Magnete (12, 14) etwa 70% der Breite der ersten Magnete (11, 13) beträgt.

6. Vorrichtung nach Anspruch 4 oder 5, wobei die ersten Magnete (11, 13), gemessen entlang einer Richtung senkrecht zu ihrer Breite und lokal parallel zu den einander gegenüberliegenden Flächen (2.1, 3.1) eine Länge aufweisen, die größer ist als eine Länge der zweiten Magnete (12, 14), gemessen entlang einer Richtung senkrecht zu ihrer Breite und lokal parallel zu den einander gegenüberliegenden Flächen (2.1, 3.1).

7.  Vorrichtung nach Anspruch 6, wobei die Breite der zweiten Magnete (12, 14) etwa 70% der Breite der ersten Magnete (11, 13) beträgt.

8.  Vorrichtung nach Anspruch 4, wobei die ersten Magnete (11, 13) etwa 70% der Fläche (2.1) des sie tragenden Elements (2) darstellen.

9.  Vorrichtung nach Anspruch 4, wobei die Elemente (2, 3) scheibenförmig ausgebildet sind und kollineare Mittelachsen besitzen, wobei das bewegliche Element (3) eine Hauptfläche (3.1) aufweist, die einer Hauptfläche (2.1) des feststehenden Elements (2.1) gegenüberliegt, wodurch die einander gegenüberliegenden Flächen gebildet werden, und das bewegliche Element (3) um seine Mittelachse drehbar ist, wobei jeder erste Vektor senkrecht zu den Hauptflächen (2.1, 3.1) verläuft und jeder zweite Magnetisierungsvektor parallel zu den Hauptflächen (2.1, 3.1) und zu einer lokal tangentialen Richtung in Bezug auf das mit den Magneten ausgestattete Element (2) verläuft, wobei die Breite jedes Magneten (11, 12, 13, 14) entlang einer lokal tangentialen Richtung in Bezug auf das betreffende Element (2) gemessen wird.

10. Vorrichtung nach Anspruch 9, wobei die Magnete (11, 12, 13, 14) winkelsektorförmig ausgebildet sind und die ersten Magnete (11, 13) eine radiale Abmessung aufweisen, die größer ist als eine radiale Abmessung der zweiten Magnete (12, 14).

11. Vorrichtung nach einem der vorhergehenden Ansprüche, wobei die Magnete (11, 12, 13, 14) gemäß einem Halbach-Array angeordnet sind.

12. Vorrichtung nach einem der vorhergehenden Ansprüche, wobei die Magnete (11, 12, 13, 14) von dem feststehenden Element (2) getragen sind.

13. Gebremstes Rad (104) eines Fahrzeugs, enthaltend eine Bremsvorrichtung nach einem der vorhergehenden Ansprüche, enthaltend eine Felge, eine Radscheibe oder eine Nabe, mit welcher das bewegliche Element (3) der Bremsvorrichtung drehfest verbunden ist.

14. Fahrwerk (101), umfassend ein Bein (102) mit einem Ende, das eine Welle (103) trägt, auf welcher die Nabe eines Rades (104) nach Anspruch 13 angebracht ist, wobei das feststehende Element (2) der Bremsvorrichtung drehfest mit dem Bein (102) verbunden ist.

## Claims

1.  Eddy current magnetic braking device, comprising two outer elements (2) surrounding a central element (3) in relative movement with respect to the outer elements (2), the outer elements (2) having first faces (2.1) facing opposite second faces (3.1) of the central element (3) and each carrying a plurality of magnets (11, 12, 13, 14) suitable for emitting, via the first faces (2.1), a magnetic flow generating in the central element (3), made of electrically conductive material, eddy currents when the elements (2, 3) are in relative movement, the magnets being arranged in such a way that the outer elements (2) attract each other, **characterized in that** the central element (3) has a thickness such that a skin effect is generated from each face (3.1) of the central element (3) over more than half the thickness of the central element (3) over at least a range of possible relative speeds of the central element (3) relative to the outer elements (2).

2.  Device according to claim 1, wherein the outer members (2) are stators and the central member (3) is a rotor.

3.  Device according to claim 2, wherein the outer members (2) and the central member (3) are disc-shaped and have colinear central axes.

4.  Device according to claim 1, wherein the plurality of magnets comprises first magnets (11, 13) and second magnets (12, 14) arranged alternately, the first magnets (11, 13) having a first magnetization vector substantially perpendicular to the facing surfaces (2.1, 3.1) and each of the second magnets (12, 14) having a second magnetization vector substantially perpendicular to the first magnetization vectors of the two first magnets between which it is located; and the magnets (11, 12, 13, 14) have widths such that the first magnets (11, 13) are spaced apart in pairs by a first distance less than a second distance separating the second magnets (12, 14) in pairs.

5.  Device according to claim 4, wherein the width of the second magnets (12, 14) is around 70% that of the first magnets (11, 13).

6.  Device according to claim 4 or 5, wherein the first magnets (11, 13) have a length measured along a direction perpendicular to their width and locally parallel to the facing surfaces (2.1, 3.1) which is greater than a length of the second magnets (12, 14) measured along a direction perpendicular to their width and locally parallel to the facing surfaces (2.1, 3.1).

7.  Device according to claim 6, wherein the width of the second magnets (12, 14) is around 70% that of the first magnets (11, 13).

8. Device according to claim 4, wherein the first magnets (11, 13) represent around 70% of the surface (2.1) of the element (2) which carries them.

9. Device according to claim 4, wherein the elements (2, 3) have a disc shape and have colinear central axes, the movable element (3) having a main face (3.1) opposite a main face (2.1) of the stationary element (2), thus forming the opposite surfaces and the movable element (3) pivoting on its central axis, each first vector extending perpendicularly to the main faces (2.1, 3.1), and each second magnetisation vector extending parallel to the main faces (2.1, 3.1) and to a direction locally tangent to the element (2) provided with magnets, the width of each magnet (11, 12, 13, 14) being measured in a direction locally tangential to the element (2) in question.

10. Device according to claim 9, wherein the magnets (11, 12, 13, 14) have an angular sector shape and the first magnets (11, 13) have a radial dimension greater than a radial dimension of the second magnets (12, 14).

11. Device according to any one of the preceding claims, wherein the magnets (11, 12, 13, 14) are disposed according to a Halbach pattern.

12. Device according to any one of the preceding claims, wherein the magnets (11, 12, 13, 14) are carried by the stationary element (2).

13. Braked vehicle wheel (104) comprising a braking device according to any one of the preceding claims, comprising a rim, a wall or a hub to which the movable element (3) of the braking device is rotatably linked.

14. Landing gear (101) comprising a strut (102) having an end carrying a shaft (103), on which the hub of a wheel (104) is mounted according to claim 13, the stationary element (2) of the braking device being rotatably linked to the strut (102).

**Fig. 1**

**Fig. 2**

**Fig. 3**

**Fig. 4**

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2953196 A
- WO 2014029962 A
- US 2020030010 A
- JP S602069 A
- GB 2103023 A